# FASCICULE DE BREVET EUROPEEN

(11) **EP 3 283 374 B1**
(45) Date de publication et mention de la délivrance du brevet: **30.01.2019**
(21) Numéro de dépôt: 16716840.0
(22) Date de dépôt: 05.04.2016
(51) Int. Cl.: B64D 11/06, B60R 11/02, B64D 11/00

(54) **DISPOSITIF DE MAINTIEN D'UN DISPOSITIF PORTATIF POUR SIEGE D'AERONEF**
VORRICHTUNG ZUM TRAGEN EINER TRAGBAREN VORRICHTUNG FÜR EINEN FLUGZEUGSITZ
DEVICE FOR SUPPORTING A PORTABLE DEVICE FOR AN AEROPLANE SEAT

(30) Priorité: 13.04.2015 US 201562146674 P
(43) Date de publication de la demande: 21.02.2018
(73) Titulaire: Zodiac Seats France, 36100 Issoudun (FR)
(72) Inventeur: CASTAING, Nathalie, 36100 Issoudun (FR); BONNEFOY, Bastien, 36100 Issoudun (FR); MENARD, Sébastien, 36100 Issoudun (FR); THAVANAUD, Thierry, 36100 Issoudun (FR); MONTEIRO, Jean-Pierre, 18570 Le Subdray (FR)
(74) Mandataire: Marconnet, Sébastien
(86) Numéro de dépôt international: PCT/EP2016/057431
(87) Numéro de publication internationale: WO 2016/165982

(56) Documents cités:
- EP-A1- 2 746 158
- WO-A1-2012/118096
- WO-A1-2015/010123
- CN-U- 204 026 084
- DE-U1-202012 007 102
- FR-A1- 2 982 218
- FR-A1- 3 009 811
- FR-A1- 3 009 812
- US-A1- 2012 120 626

## Description

La présente invention porte sur un dispositif de maintien d'un dispositif portatif, notamment un écran vidéo ou une tablette numérique, pour siège d'aéronef. L'invention trouve une application particulièrement avantageuse, mais non exclusive, avec les sièges d'avion de classe économique.

Les sièges de la classe économique comportent, de façon connue en soi, une assise, un dossier et une tablette escamotable agencée sur une face arrière du dossier.

Ces sièges ne sont généralement pas équipés d'un système multimédia. En conséquence, pour profiter de contenus vidéo ou musicaux, un passager doit utiliser son écran multimédia, par exemple un écran portatif ou une tablette numérique, et le poser sur la tablette escamotable du siège, dite tablette repas. Cela présente l'inconvénient d'encombrer la tablette repas qui dispose alors d'un espace réduit pour supporter d'autres objets. En outre, le positionnement de l'écran portatif ou d'une tablette numérique n'est pas optimum en termes de confort visuel dans la mesure où la tablette repas n'a pas été prévue à cette fin.

Le document EP2746158 enseigne l'utilisation d'un dispositif de maintien d'un écran portatif comprenant un élément de support positionné sur la face arrière du dossier. L'élément de support, qui est monté rotatif par rapport au dossier, est mobile entre une position repliée et une position déployée dans laquelle il est apte à supporter l'écran portatif. Le siège est toutefois dépourvu de tablette repas.

Le document WO2015/010123 décrit des ensembles de support réglables qui comprennent une base, une plate-forme de support couplée élastiquement à la base, et une barre coulissante couplée élastiquement à une paire de pistes sur la base.

Le document FR3009812 décrit l'utilisation d'un dispositif de maintien d'un écran portatif implanté derrière une tablette repas. Il nécessite de déplier la tablette repas afin de pouvoir accéder au dispositif de maintien et mettre en place l'écran portatif.

L'invention vise à remédier efficacement à cet inconvénient en proposant un siège destiné à être installé dans un aéronef comportant:
- un dossier ayant une face avant, destinée à recevoir un passager, en appui, et une face arrière opposée à la face avant,
- une tablette, notamment escamotable, dite tablette repas, positionnée sur la face arrière du dossier, le siège comportant en outre un dispositif de maintien d'un dispositif portatif comprenant un élément de support positionné sur la face arrière du dossier, l'élément de support étant monté rotatif par rapport au dossier, en particulier suivant une charnière, et est mobile entre une position repliée et une position déployée dans laquelle il est apte à supporter le dispositif portatif, caractérisé en ce que, en position repliée, l'élément de support est recouvert par la tablette repas en position rangée, et en ce que la tablette repas est apte à être remise en position rangée alors que l'élément de support est en position déployée.

L'invention permet ainsi au passager de pouvoir installer un écran portable personnel sur un support dédié appartenant à un siège normalement dépourvu de système multimédia et de profiter ainsi de façon confortable de son contenu vidéo et audio-phonique.

Selon une réalisation, la charnière est portée par un côté inférieur d'un capot de siège.

Selon une réalisation, la charnière est à lame ressort ou à friction.

Selon une réalisation, l'élément de support comporte au moins un moyen de retenue du dispositif portatif.

Selon une réalisation, le moyen de retenue comporte au moins une rainure. Cela permet de maintenir le bord inférieur de l'écran.

Selon une réalisation, le moyen de retenue comporte plusieurs rainures parallèles s'étendant les unes à côté des autres. Cela permet d'adapter l'angle d'inclinaison de l'écran.

Selon une réalisation, le dispositif de maintien comporte en outre un élément de maintien configuré pour maintenir un bord supérieur du dispositif portatif. Cela permet de maintenir les deux bords opposés de l'écran.

Selon une réalisation, l'élément de maintien est monté sur une base, notamment mobile en translation par rapport à une portion fixe du dossier.

Selon une réalisation, le dispositif de maintien comporte un dispositif de serrage.

Selon une réalisation, le dispositif de serrage comporte une courroie élastique positionnée autour d'un premier plot ménagé sur la base) et d'un deuxième plot ménagé sur la portion fixe du dossier.

Selon une réalisation, le siège comporte un dispositif d'absorption de choc, notamment muni d'un élément réalisé dans un matériau élastique, en particulier positionné à l'intérieur d'une cavité s'étendant entre la base et la portion fixe. Cela permet d'amortir le choc lorsque le crochet revient en position initiale suite au relâchement de la courroie élastique.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- La figure 1a est une vue en perspective d'un siège comportant un dispositif de maintien selon la présente invention;
- La figure 1b et 1c sont des vues en perspective illustrant respectivement une position repliée et une position déployée du dispositif de maintien selon l'invention;
- La figure 1d est une vue en perspective illustrant une mise en place d'un dispositif portatif sur le dispositif de maintien selon la présente invention;
- La figure 2 est une vue détaillée d'un dispositif de retenue du dispositif de maintien selon la présente invention;
- La figure 3 est une vue illustrant un système à courroie autorisant un déplacement en translation d'un élément de maintien selon l'invention;
- La figure 4 est une vue en perspective détaillée d'une charnière du dispositif de maintien selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

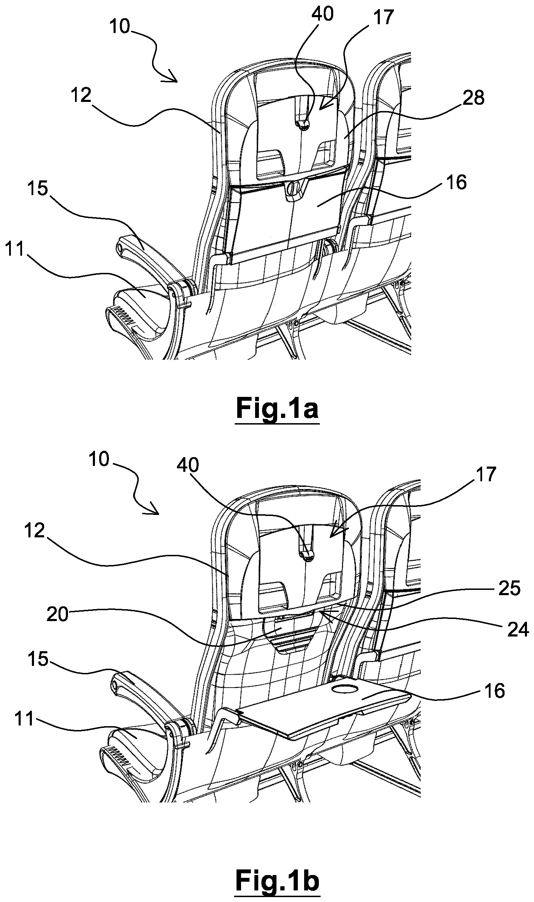

La figure 1a montre un siège 10 destiné à être installé dans un aéronef. Le siège 10 comporte une assise 11 et un dossier 12. Le dossier 12 comporte une face avant, sur laquelle le passager est destiné à venir en appui, et une face arrière opposée à la face avant. Le dossier 12 pourra être articulé par rapport à l'assise 11 pour prendre des positions inclinées. Des accoudoirs 15, notamment relevables, sont situés de part et d'autre du siège 10.

Une tablette 16, préférentiellement escamotable, dite tablette repas, est positionnée du côté de la face arrière du dossier 12. La tablette repas 16 est apte prendre une position rangée, telle que représentée sur la figure 1a, dans laquelle la tablette repas 16 est plaquée contre la face arrière du dossier 12, et une position déployée, telle que représentée sur la figure 1b, dans laquelle la tablette repas 16 s'étend, avantageusement horizontalement, pour pouvoir supporter des objets posés par le passager.

En outre, comme cela est bien visible sur les figures 1a à 1d, le siège 10 comporte un dispositif de maintien 17, notamment destiné à recevoir un dispositif portatif 21. Le dispositif de maintien 17 comprend au moins un élément de support 20 positionné sur la face arrière du dossier 12 et un élément de maintien 40, configuré pour maintenir un bord supérieur du dispositif portatif 21. Le dispositif portatif 21 peut ainsi être maintenu entre l'élément de support d'écran 20 et l'élément de maintien 40.

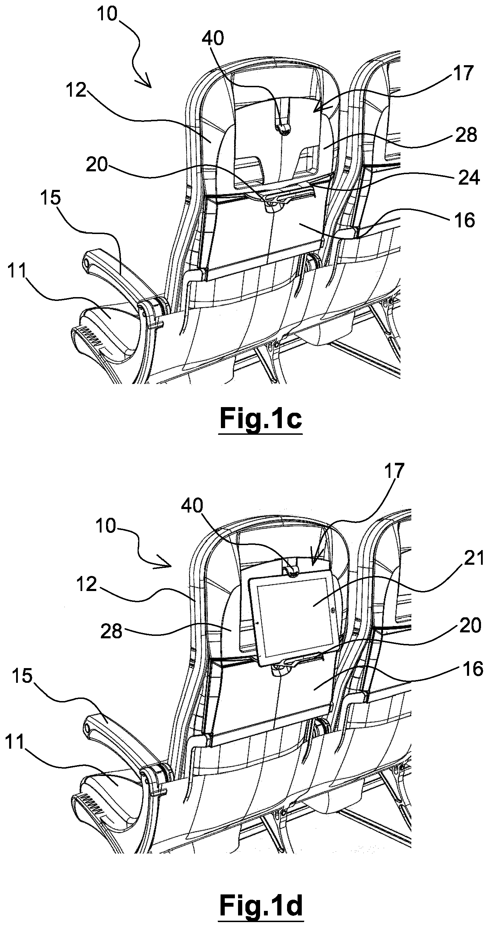

Plus précisément, selon une variante particulière de réalisation, l'élément de support 20 est mobile entre une position repliée, telle que représentée sur la figure 1b, dans laquelle l'élément de support 20 est plaqué contre la face arrière du siège 10, et une position déployée, telle que représentée sur les figures 1c et 1d, dans laquelle l'élément de support 20 est apte à supporter le dispositif portatif 21. L'élément de support 20 pourra par exemple prendre la forme d'une plaque de forme trapézoïdale.

Pour passer de la position repliée à la position déployée, l'élément de support 20 est monté rotatif par rapport au dossier 12, notamment grâce à une charnière 24. La charnière 24 est portée par un côté inférieur 25 d'un capot de siège 28, s'étendant préférentiellement en partie supérieure du dossier 12. En variante, la charnière est fixée directement sur la structure du dossier 12.

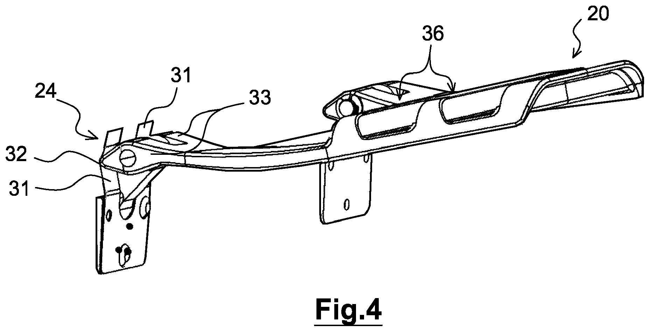

Selon un exemple particulier de réalisation, la charnière 24 est de préférence à lame ressort comme cela est illustré sur la figure 4. En l'occurrence, la charnière 24 comporte au moins un bras 31, avantageusement déformable. Alternativement, la charnière 24 deux bras déformables 31 disposés de chaque côté de l'élément de support 20.

Selon l'exemple de réalisation présenté, le bras 31 est muni d'une forme incurvée 32 destinée à recevoir une extrémité correspondante d'une patte 33 issue d'un bord de l'élément de support 20. En variante, la charnière 24 est de type à friction. En complément ou alternativement, un organe de verrouillage, constitué par exemple par un loquet, assure un maintien de l'élément de support 20 en position déployée.

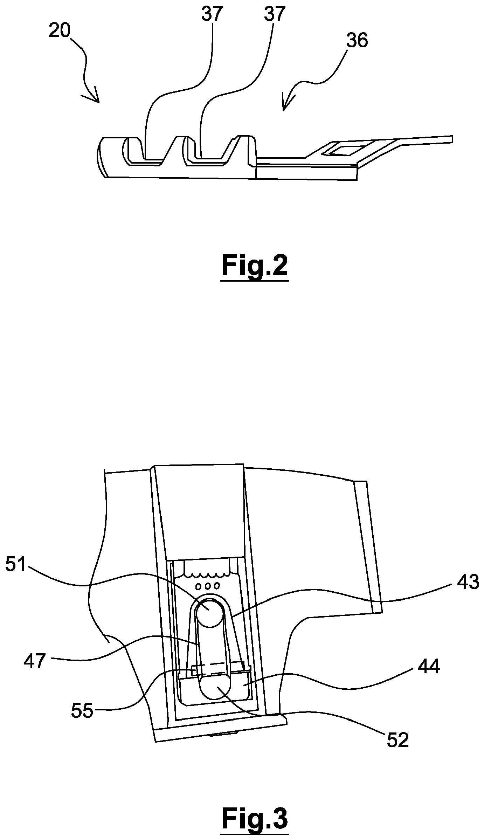

Afin de maintenir en position le bord inférieur du dispositif portatif 21, l'élément de support 20 comporte au moins un moyen de retenue 36, visible sur la figure 2. Spécifiquement, le moyen de retenue 36 comporte au moins une rainure 37, avantageusement plusieurs rainures 37 parallèles s'étendant les unes à côté des autres. Un agencement à plusieurs rainures 37 permet d'adapter l'angle d'inclinaison du dispositif portatif 21. En variante ou en complément, il sera possible d'utiliser une bande de matériau antidérapant.

Par ailleurs, comme on peut le voir sur la figure 3, l'élément de maintien 40 est monté sur une base 43. L'élément de maintien 40 pourra par exemple prendre la forme d'un crochet ouvert du côté de l'élément de support 20. De façon privilégiée, la base 43 est mobile en translation par rapport à une portion fixe 44 du dossier 12 pour pouvoir s'adapter aux dimensions du dispositif portatif 21. La portion fixe 44 du dossier 12 pourra être constituée par une plaque formant un porte-documents sur le capot de siège 28. Préférentiellement, la base 43 est mobile suivant une direction d'allongement verticale du dossier 12.

En outre, le dispositif de maintien 17 comporte un dispositif de serrage 45 apte à permettre l'application d'un effort de serrage. Plus particulièrement, le dispositif de serrage 45 comprend une courroie élastique 47 positionnée autour d'un premier plot 51 ménagé dans la base mobile 43 et d'un deuxième plot 52 ménagé dans la portion fixe 44 du dossier 12. En variante, le dispositif de serrage 45 est constitué par un ressort relié d'une part à la base 43 et d'autre part à la portion fixe 44.

L'élément de maintien 40 pourra également être réalisé dans un matériau flexible pour s'adapter aux dimensions du dispositif portatif 21.

Selon une variante de réalisation, le dispositif de maintien 17 comprend un dispositif d'absorption de choc 55. Par exemple, le dispositif d'absorption de choc 55 est muni d'un élément réalisé dans un matériau élastique, notamment un matériau élastomère. Préférentiellement, le dispositif d'absorption de choc 55 est positionné à l'intérieur d'une cavité s'étendant entre la base 43 et la portion fixe 44 du dossier 12.

On décrit ci-après, en référence aux figures 1a à 1d, le déploiement du dispositif de maintien 17 pour permettre la mise en place du dispositif portatif 21. Comme cela est illustré sur la figure 1a, lorsque l'élément de support 20 est en position repliée, ce dernier est avantageusement recouvert par la tablette repas 16 en position rangée. Pour accéder à l'élément de support 20, le passager fait donc passer la tablette repas 16 en position déployée, telle que représentée sur la figure 1b. Le passager peut ensuite faire passer l'élément de support 20 de la position repliée à la position déployée, puis remettre la tablette repas 16 en positon rangée, s'il n'en a pas l'utilité, telle que représentée sur la figure 1c.

Pour les dispositifs portatifs dont les dimensions sont supérieures à l'écart entre l'élément de maintien 40 et l'élément de support 20, par exemple lorsque la courroie élastique 47 n'est pas mise en contrainte, le passager écarte l'élément de maintien 40 par rapport à l'élément de support 20 et met en place le dispositif portatif 21 sur l'élément de support 20 de telle façon que le bord inférieur du dispositif portatif 21 soit inséré à l'intérieur de la (d'une des) rainure(s) 37. Le passager peut ensuite relâcher l'élément de maintien 40 qui vient en appui contre un bord supérieur du dispositif portatif 21. Le dispositif portatif 21 est alors maintenu serré entre l'élément de support 20 et l'élément de maintien 40 grâce à l'effort de serrage appliqué par le dispositif de serrage 45, par exemple la courroie élastique 47 mise en contrainte.

Pour les dispositifs portatifs 21 dont les dimensions sont inférieures à l'écart entre l'élément de maintien 40 et l'élément de support 20, le dispositif portatif 21 repose uniquement sur l'élément de support 20 en ayant le bord supérieur du dispositif portatif 21 en appui contre la face arrière du dossier 12. Le dispositif portatif 21 est alors dégagé de l'élément de maintien 40. L'élément de maintien 40 n'est donc pas un élément essentiel du dispositif de maintien 17 qui pourra en être dépourvu dans certains modes de réalisation simplifié de l'invention.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association. La portée de l'invention est définie par les revendications annexées.

## Revendications

1. Siège (10) destiné à être installé dans un aéronef comportant:
- un dossier (12) ayant une face avant, destinée à recevoir un passager, en appui, et une face arrière opposée à la face avant,
- une tablette (16), notamment escamotable, dite tablette repas, positionnée sur la face arrière du dossier (12),
le siège (10) comportant en outre un dispositif de maintien (17) d'un dispositif portatif (21) comprenant un élément de support (20) positionné sur la face arrière du dossier (12), l'élément de support (20) étant monté rotatif par rapport au dossier (12), en particulier suivant une charnière (24), et est mobile entre une position repliée et une position déployée dans laquelle il est apte à supporter le dispositif portatif (21), **caractérisé en ce que**, en position repliée, l'élément de support (20) est recouvert par la tablette repas (16) en position rangée, et **en ce que** la tablette repas (16) est apte à être remise en position rangée alors que l'élément de support (20) est en position déployée.

2. Siège selon la revendication 1, **caractérisé en ce que** la charnière (24) est portée par un côté inférieur d'un capot de siège (28).

3. Siège selon la revendication 1 ou 2, **caractérisé en ce que** la charnière (24) est à lame ressort ou à friction.

4. Siège selon l'une quelconque des revendications 1 à 3, **caractérisé en ce que** l'élément de support (20) comporte au moins un moyen de retenue (36) du dispositif portatif (21).

5. Siège selon la revendication 4, **caractérisé en ce que** le moyen de retenue (36) comporte au moins une rainure (37).

6. Siège selon la revendication 5, **caractérisé en ce que** le moyen de retenue (36) comporte plusieurs rainures (37) parallèles s'étendant les unes à côté des autres.

7. Siège selon l'une quelconque des revendications 1 à 6, **caractérisé en ce que** le dispositif de maintien (17) comporte en outre un élément de maintien (40) configuré pour maintenir un bord supérieur du dispositif portatif (21).

8. Siège selon la revendication 7, **caractérisé en ce que** l'élément de maintien (40) est monté sur une base (43), notamment mobile en translation par rapport à une portion fixe (44) du dossier (12).

9. Siège selon la revendication 8, **caractérisé en ce que** le dispositif de maintien (17) comporte un dispositif de serrage (45).

10. Siège selon la revendication 9, **caractérisé en ce que** le dispositif de serrage (45) comporte une courroie élastique (47) positionnée autour d'un premier plot (51) ménagé sur la base (43) et d'un deuxième plot (52) ménagé sur la portion fixe (44) du dossier (12).

11. Siège selon la revendication 10, **caractérisé en ce qu'**il comporte un dispositif d'absorption de choc (55), notamment muni d'un élément réalisé dans un matériau élastique, en particulier positionné à l'intérieur d'une cavité s'étendant entre la base (43) et la portion fixe (44).

## Patentansprüche

1. Sitz (10) zum Einbau in ein Flugzeug, umfassend:
- eine Rückenlehne (12) mit einer Vorderseite zum Tragen eines Passagiers und einer der Vorderseite gegenüberliegenden Rückseite,
- ein insbesondere einklappbares Tablett (16), sogenanntes Mahlzeittablett, das auf der Rückseite der Rückenlehne (12) angeordnet ist,
wobei der Sitz (10) ferner eine Haltevorrichtung (17) für eine tragbare Vorrichtung (21) umfasst, die ein Stützelement (20) umfasst, das an der Rückseite der Rückenlehne (12) angeordnet ist, wobei das Stützelement (20) relativ zu der Rückenlehne (12), insbesondere um ein Scharnier (24) herum, drehbar gelagert ist, und zwischen einer eingeklappten Stellung und einer ausgefahrenen Stellung, in der es zum Tragen der tragbaren Vorrichtung (21) eingerichtet ist, bewegbar ist, **dadurch gekennzeichnet, dass** in der gefalteten Stellung das Stützelement (20) von der Mahlzeittablett (16) in der verstauten Stellung abgedeckt wird, und dass das Mahlzeittablett (16) wieder in die verstaute Stellung gebracht werden kann, während das Stützelement (20) in der entfalteten Stellung ist.

2. Sitz nach Anspruch 1, **dadurch gekennzeichnet, dass** das Scharnier (24) von einer unteren Seite eines Sitzdeckels (28) getragen wird.

3. Sitz nach Anspruch 1 oder 2, **dadurch gekennzeichnet, dass** das Scharnier (24) eine Feder- oder Reibungsscharnier ist.

4. Sitz nach einem der Ansprüche 1 bis 3, **dadurch gekennzeichnet, dass** das Stützelement (20) mindestens ein Haltemittel (36) für die tragbare Vorrichtung (21) aufweist.

5. Sitz nach Anspruch 4, **dadurch gekennzeichnet, dass** das Haltemittel (36) mindestens eine Nut (37) aufweist.

6. Sitz nach Anspruch 5, **dadurch gekennzeichnet, dass** das Haltemittel (36) mehrere parallele, sich nebeneinander erstreckenden Nuten (37) umfasst.

7. Sitz nach einem der Ansprüche 1 bis 6, **dadurch gekennzeichnet, dass** die Haltevorrichtung (17) ferner ein zum Halten einer Oberkante der tragbaren Vorrichtung (21) konfiguriertes Halteelement (40) umfasst.

8. Sitz nach Anspruch 7, **dadurch gekennzeichnet, dass** das Halteelement (40) an einer insbesondere relativ zu einem feststehenden Abschnitt (44) der Rückenlehne (12) translatorisch bewegbaren Grundlage (43) angebracht ist.

9. Sitz nach Anspruch 8, **dadurch gekennzeichnet, dass** die Haltevorrichtung (17) eine Klemmvorrichtung (45) aufweist.

10. Sitz nach Anspruch 9, **dadurch gekennzeichnet, dass** die Klemmvorrichtung (45) einen elastischen Gurt (47) umfasst, der um einen ersten, an der Grundlage (43) vorgesehenen Bolzen (51) und einen zweiten, am festen Abschnitt (44) der Rückenlehne (12) vorgesehenen Bolzen (52) positioniert ist.

11. Sitz nach Anspruch 10, **dadurch gekennzeichnet, dass** er eine Stoßdämpfungsvorrichtung (55) umfasst, die insbesondere mit einem Element aus einem elastischen Material versehen ist, das insbesondere in einem sich zwischen der Grundlage (43) und dem festen Abschnitt (44) erstreckenden Hohlraum angeordnet ist.

## Claims

1. A seat (10) to be installed in an aircraft comprising:
- a backrest (12) having a front face for supporting a passenger and a rear face opposite to the front face,
- a tray (16), in particular retractable, so-called meal tray, positioned on the back of the backrest (12),
wherein the seat (10) further comprises a holding device (17) for a portable device (21) comprising a support member (20) positioned on the rear face of the backrest (12), wherein the support member (20) is rotatably mounted relative to the backrest (12), in particular around a hinge (24), and is movable between a folded position and an extended position in which it is adapted to support the portable device (21), **characterized in that**, in the folded position, the support element (20) is covered by the meal tray (16) in the stowed position, and **in that** the meal tray (16) can be put back into the stowed position while the support element (20) is in the extended position.

2. The seat according to claim 1, **characterized in that** the hinge (24) is carried by a lower side of a seat cover (28).

3. The seat according to claim 1 or 2, **characterized in that** the hinge (24) is a spring blade or friction hinge.

4. The seat according to any of the claims 1 to 3, **characterized in that** the support member (20) comprises at least one retaining means (36) for the portable device (21).

5. The seat according to claim 4, **characterized in that** the retaining means (36) comprises at least one groove (37).

6. The seat according to claim 5, **characterized in that** the retaining means (36) comprises a plurality of parallel grooves (37) extending side by side.

7. The seat according to any of the claims 1 to 6, **characterized in that** the holding device (17) further comprises a holding element (40) configured to maintain an upper edge of the portable device (21).

8. The seat according to claim 7, **characterized in that** the holding member (40) is mounted on a base (43), in particular movable in translation relative to a fixed portion (44) of the backrest (12).

9. The seat according to claim 8, **characterized in that** the holding device (17) comprises a clamping device (45).

10. The seat according to claim 9, **characterized in that** the clamping device (45) comprises an elastic belt (47) positioned around a first stud (51) provided on the base (43) and a second stud (52) provided on the fixed portion (44) of the backrest (12).

11. The seat according to claim 10, **characterized in that** it comprises a shock absorbing device (55), in particular provided with a member made of an elastic material, in particular positioned inside a cavity extending between the base (43) and the fixed portion (44).
